# EUROPÄISCHE PATENTSCHRIFT

(11) **EP 0 297 307 B1**
(45) Veröffentlichungstag und Bekanntmachung des Hinweises auf die Patenterteilung: **08.09.1993**
(21) Anmeldenummer: 88108882.7
(22) Anmeldetag: 03.06.1988
(51) Int. Cl.: H02G 3/22, H02B 1/20, H02G 3/06

(54) **Einrichtung zur Durchführung von Kabeln**
Cable feed-through device
Dispositif de traversée de câbles

(30) Priorität: 30.06.1987 DE 3721484; 18.05.1988 DE 3816870
(43) Veröffentlichungstag der Anmeldung: 04.01.1989
(73) Patentinhaber: Heidelberger Druckmaschinen Aktiengesellschaft, D-69019 Heidelberg (DE)
(72) Erfinder: Rodi, Anton, Dipl.-Ing.(FH), D-6906 Leimen 3 (DE); Blaser, Peter, T.,Dipl.-Ing. (FH), D-6912 Dielheim (DE)
(74) Vertreter: Stoltenberg, Heinz-Herbert Baldo

(56) Entgegenhaltungen:
- EP-A- 0 223 393
- FR-A- 2 537 794

## Beschreibung

Die Erfindung betrifft eine Einrichtung zum Durchführen von Kabeln durch eine Gehäuseöffnung in einer Gehäusewand in das Innere eines Gehäuses mit einem von der Gehäusewand getragenen Rahmen und einer Mehrzahl von innerhalb des Rahmens verspannten, allseitig abgestützten quaderförmigen einstückigen Füllstücken aus aufgeschäumtem Kunststoff, von welchen zumindest einzelne durch deren Ausstattung mit einer ein Kabel umschließenden Längsbohrung und einer Trennfuge als jeweiliger Zugentlastungsblock für ein jeweiliges Kabel dienen.

Eine derartige Einrichtung ist beispielsweise aus der Druckschrift EP 0 223 393 A2 bekannt.

In der Praxis sind in ein Gehäuse einzuführende Enden von Kabeln in bestimmten Fällen mit relativ sperrigen Kupplungsvorrichtungen bestückt, mittels welcher ein schneller und unkomplizierter Anschluß der Kabel an entsprechenden Gegenstücken im Gehäuse erfolgen kann. Ein entsprechend schnelles und leichtes Entfernen eines Kabels aus dem Gehäuse erfordert nun aber auch eine Kabeldurchführung durch die Gehäusewand, die einen ausreichenden Freiraum zum Hindurchführen der relativ sperrigen Kupplungsvorrichtungen bietet.

Bei der bekannten Einrichtung ist dieser Freiraum einerseits bei der Montage durch die mit dem Rahmen gebildete Öffnung bestimmt und kann daher im Falle der Durchführung von nur wenigen Kabeln unter Umständen kleiner sein als zum Hindurchführen einer Kupplungsvorrichtung notwendig wäre. Zum anderen müßte bei einer Demontage nur eines Kabels zu eventuellen Reparaturzwecken innerhalb des Rahmens Platz für eine Kupplungsvorrichtung gegebenenfalls durch völliges Entfernen aller Füllstücke geschaffen werden.

Die bei der bekannten Einrichtung verwendeten, als Zugentlastungsblöcke dienenden Füllstücke sind im übrigen auch aus der Druckschrift FR 2 537 794 A1 bekannt. Sie besitzen eine quaderförmige Gestalt, eine ein Kabel umschließende Längsbohrung und eine Trennfuge in einer die Symmetrieachse der Längsbohrung enthaltenden Ebene.

Mit der Erfindung soll eine Einrichtung zum Durchführen von Kabeln durch eine Gehäuseöffnung in einer Gehäusewand in das Innere eines Gehäuses vorgeschlagen werden, die einerseits leicht montierbar ist und andererseits die Bestückung von Kabelenden mit beliebig gestalteten Kupplungsvorrichtungen ermöglicht.

Erfindungsgemäß ist hierzu eine gattungsgemäße Einrichtung derart ausgebildet, daß der Rahmen eine diesen tragende Rückwand aufweist, welche an einer Außenseite der Gehäusewand lösbar mit dieser verbunden ist, die Gehäuseöffnung überdeckt und eine Aussparung aufweist, der Rahmen in das Innere des Gehäuses hineinragt, und die Kabel durch die Aussparung in das Innere des Gehäuses eingeführt sind.

Ein wesentlicher Vorteil einer erfindungsgemäßen Einrichtung besteht darin, daß nunmehr vorkonfektionierte, mit Steckem beliebiger Größe versehene Kabel in diese Einrichtung vormontiert werden können. Die Zugentlastungsblöcke zur Aufnahme der Kabel können mit Längsbohrungen unterschiedlicher Größe versehen sein, so daß die Einrichtung für Kabelverschiedener Durchmesser verwendbar ist, ohne daß die äußeren Abmessungen der quaderförmigen Zugentlastungsblöcke unterschiedlich sind.

Ein weiterer Vorteil ist darin zu sehen, daß die Kabel jederzeit gelöst, bzw. ausgetauscht werden können, da aufgrund des sicheren Haltes des Kabels in einem Zugentlastungsblock eine unlösbare Verbindung, beispielsweise durch Kleben oder Einfüllen einer zusätzlichen Vergußmasse nicht erforderlich ist.

In vorteilhafter Ausgestaltung weist der Rahmen senkrecht zur Rückwand verlaufende und mit dieser fest verbundene, zwischen Seitenwänden des Rahmens angeordnete Stege auf und mittels der Stege innerhalb des Rahmens geschaffene Zwischenräume sind mit jeweils zu einer Füllstückreihe aneinandergereihten Füllstücken ausgefüllt.

Damit besteht in bestimmten Fällen die Möglichkeit einer Ergänzung, einer Entfernung oder eines Austauschs ohne eine völlige Demontage der Einrichtung. Solche Fälle liegen beispielsweise vor, wenn entsprechende Umrüstungen insbesondere auf einen der Zwischenräume beschränkt sind. Anstelle einer bekannten H-förmigen Ausbildung der Stege können diese zur Abstützung der Füllstücke auch andere Strukturen aufweisen, wie beispielsweise eine gezahnte Struktur, wobei das Profil der Struktur in Richtung einer Schiebebewegung zur Montage der Füllstück verläuft.

Wird die Längsbohrung eines Zugentlastungsblocks mit einem Durchmesser versehen, der etwas geringer als der Außendurchmesser eines durch diese Längsbohrung hindurchgeführten Kabels ist, so trägt dies dazu bei, eine rutschfeste, staub- und spritzwassergeschützte Verbindung zwischen dem Zugentlastungsblock und dem darin befindlichen Kabel herzustellen. Die Einrichtung eignet sich damit insbesondere für Schaltschränke, welche diese Bedingungen erfüllen müssen.

Eine weitere Ausgestaltung der Erfindung sieht vor, bei einer Vielzahl von Füllstücken solche, die nicht als Zugentlastungsblöcke dienen, als sogenannte Blindquader auszubilden, d.h. diese Füllstücke weisen keine Längsbohrung auf bzw. deren Längsbohrung ist mit einem Blindstopfen verschlossen. Durch die Anordnung solcher Blindstopfen ist auch das nachträgliche Einfügen von Kabeln in besonders einfacher Weise möglich.

Es besteht auch die Möglichkeit, mehrere Zugentlastungsblöcke zusammenzufassen, so daß diese einen gemeinsamen Block bilden. Dieser weist dann mehrere Längsbohrungen mit jeweils diesen zugeordneten Trennfugen auf.

In weiterer Ausgestaltung ist der Rahmen mittels einer lösbar mit dessen Seitenwänden verbindbaren, der Rückwand gegenüberliegenden Stirnwand geschlossen, welche eine jeweilige Füllstückreihe gegen die Rückwand preßt.

Damit sind die Füllstücke auf einfache Weise innerhalb des Rahmens verspannbar. Als eine weitere Maßnahme zur Verspannung der Füllstücke innerhalb des Rahmens sind in vorteilhafter Ausgestaltung die Abmessungen der Zwischenräume und der Füllstücke so aufeinander abgestimmt, daß eine jeweilige in einen Zwischenraum eingeschobene Füllstückreihe unter einer seitlich hierauf wirkenden Druckspannung steht.

Bei einer vorteilhaften Ausbildung ist das Innere des Gehäuses, in welche die Kabel mittels der Einrichtung eingeführt werden, gegenüber der in deren Rückwand vorgesehenen Aussparung abgedichtet. Hierbei ist aus der Rückwand, aus Seitenwänden des Rahmens, aus einer der Rückwand gegenüberliegenden, den Rahmen schließenden Stirnwand, aus einer mittels der Füllstücke gebildeten geschlossenen Decke und aus einer dieser gegenüberliegenden Bodenplatte eine im Bereich der Aussparung offene und im übrigen geschlossene Kammer gebildet.

Ein Ausführungsbeispiel des Erfindungsgegenstands ist in der nachfolgend erläuterten Zeichnung dargestellt.

Hierin ist ein Gehäuse - beispielsweise eines Schaltschranks - schematisch durch eine Gehäusewand 2 und einen Boden 3 dargestellt. Die im folgenden kurz Kabeldurchführung 1 benannte Einrichtung zum Durchführen von Kabeln weist einen mit einer Rückwand 17, zwei Seitenwänden 7 und 8 sowie mit Stegen 6 gebildeten, einseitig offenen Rahmen auf, der mittels einer Stirnwand 9 geschlossen ist, welche über Schraubenverbindungen 15, 16 lösbar mit den Seitenwänden 7 und 8 verbunden ist.

Eine Rückwand 17 des Rahmens ist an einer Außenseite der Gehäusewand 2 mittels Schrauben 19 lösbar mit der Gehäusewand 2 verbunden. Die Rückwand 17 überdeckt dabei eine zur Montage der Kabeldurchführung 1 an der Gehäusewand 2 in dieser Gehäusewand 2 vorgesehene Gehäuseöffnung 18 und weist ihrerseits eine Aussparung 4 auf, durch welche die Kabel in das Innere des Gehäuses eingeführt sind. Die senkrecht zur Rückwand 17 verlaufenden und mit dieser fest verbundenen Seitenwände 7 und 8 und Stege 6 ragen in das Innere des Gehäuses hinein. Somit wird der Rahmen insgesamt von dessen an der Gehäusewand 2 befestigten Rückwand 17 getragen.

Innerhalb des Rahmens ist eine Mehrzahl von quaderförmigen einstückigen Füllstücken 10 aus aufgeschäumtem Kunststoff verspannt. Beim Ausführungsbeispiel sind hierzu innerhalb des Rahmens mittels der Stege 6 Zwischenräume geschaffen, in welchen jeweils eine aus aneinandergereihten Füllstücken 10 gebildete Füllstückreihe eingepaßt ist, wobei die Abmessungen der Zwischenräume und der Füllstücke 10 so aufeinander abgestimmt sind, daß eine jeweilige Füllstückreihe unter einer seitlich hierzu wirkenden Druckspannung steht, die beim Einschieben eines jeweiligen Füllstücks 10 in einen jeweiligen Zwischenraum in Richtung des Pfeils 13 erzeugt wird. Dabei sind alle Zwischenräume vollständig mit Füllstücken 10 ausgefüllt.

Eine Alternative oder auch zusätzliche Möglichkeit zum Vorspannen der Füllstücke 10 innerhalb des Rahmens ist dadurch gegeben, daß eine jeweilige Füllstückreihe die freien Enden der sie einschließenden Stege 6 vor dem Anbringen der Stirnwand 9 überragt, so daß eine jeweilige Füllstückreihe mittels der Stirnwand 9 gegen die Rückwand 17 gepreßt wird.

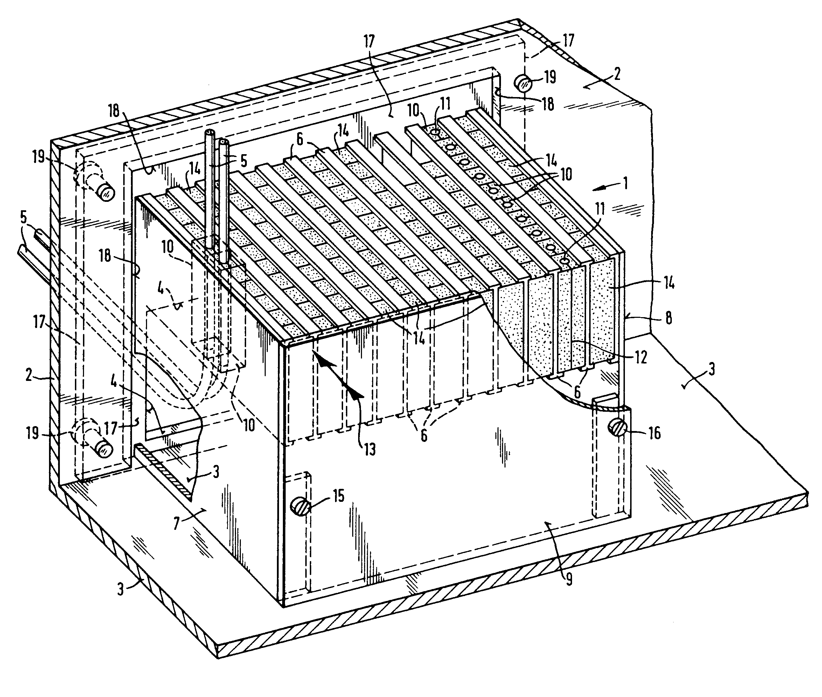

Die Stege weisen ein aus der Zeichnung ersichtliches H-Profil auf, dessen Schenkel die Füllstücke 10 abstützen, so daß die Füllstücke 10 insgesamt allseitig abgestützt sind.

Vorzugsweise ist genau eine der Anzahl der in das Gehäuse einzuführenden Kabel entsprechende Anzahl der Füllstücke 10 als Zugentlastungsblock ausgebildet und hierzu mit einer ein Kabel umschließenden Längsbohrung 11 und einer Trennfuge 12 versehen. Bei der Montage der erfindungsgemäßen Einrichtung können somit die Kabel außerhalb des Gehäuses und außerhalb des Rahmens zunächst mit Zugentlastungsblöcken bestückt werden, welche anschließend in jeweilige Zwischenräume eingeschoben werden.

Im dargestellten Ausführungsbeispiel sind die Seitenwände 7 und 8 auf den Boden 3 des Gehäuses aufgesetzt. Damit ist aus der Rückwand 17, den Seitenwänden 7 und 8, der Stirnwand 9, einer mittels der Füllstücke 10 bzw. der mit Kabeln belegten Zugentlastungsblöcke geschlossenen Decke und aus einer den Boden 3 bildenden Bodenplatte eine Kammer geschaffen, die lediglich im Bereich der Aussparung 4 offen und im übrigen geschlossen ist. Damit ist auf einfache Weise eine Abdichtung des Innenraumes des Gehäuses gegenüber der Aussparung 4 geschaffen. Diese Abdichtung kann auch beim eventuellen Entfernen eines Kabels aufrechterhalten werden, wenn ein dadurch frei gewordener Zugentlastungsblock durch ein geschlossenes Füllstück 10 ersetzt oder mittels eines Blindstopfens verschlossen wird.

## Patentansprüche

1. Einrichtung zum Durchführen von Kabeln (5) durch eine Gehäuseöffnung (18) in einer Gehäusewand (2) in das Innere eines Gehäuses mit
- einem von der Gehäusewand (2) getragenen Rahmen
und
- einer Mehrzahl von innerhalb des Rahmens verspannten, allseitig abgestützten quaderförmigen einstückigen Füllstücken (10) aus aufgeschäumtem Kunststoff, von welchen zumindest einzelne durch deren Ausstattung mit einer ein Kabel (5) umschließenden Längsbohrung (11) und einer Trennfuge (12) als jeweiliger Zugentlastungsblock für ein jeweiliges Kabel (5) dienen,
**dadurch gekennzeichnet,** daß
- der Rahmen eine diesen tragende Rückwand (17) aufweist, welche an einer Außenseite der Gehäusewand (2) lösbar mit dieser verbunden ist, die Gehäuseöffnung (18) überdeckt und eine Aussparung (4) aufweist,
- der Rahmen in das Innere des Gehäuses hineinragt,
und
- die Kabel (5) durch die Aussparung (4) in das Innere des Gehäuses eingeführt sind.

2. Einrichtung nach Anspruch 1,
**dadurch gekennzeichnet,** daß
- der Rahmen senkrecht zur Rückwand (17) verlaufende und mit dieser fest verbundene, zwischen Seitenwänden (7, 8) des Rahmens angeordnete Stege (6) aufweist,
und
- mittels der Stege (6) innerhalb des Rahmens geschaffene jeweilige Zwischenräume mit jeweils zu einer Füllstückreihe aneinandergereihten Füllstücken (10) ausgefüllt sind.

3. Einrichtung nach Anspruch 2,
**dadurch gekennzeichnet,** daß
der Rahmen mittels einer lösbar mit dessen Seitenwänden (7, 8) verbindbaren, der Rückwand (17) gegenüberliegenden Stirnwand (9) geschlossen ist, welche eine jeweilige Füllstückreihe gegen die Rückwand (17) preßt.

4. Einrichtung nach Anspruch 1,
**dadurch gekennzeichnet,** daß
die Längsbohrung (11) eines als Zugentlastungsblock ausgebildeten Füllstücks (10) mittels eines Blindstopfens verschlossen ist.

5. Einrichtung nach Anspruch 2,
**dadurch gekennzeichnet,** daß
die Abmessungen der Zwischenräume und der Füllstücke (10) so aufeinander abgestimmt sind, daß eine jeweilige in einen Zwischenraum eingeschobene Füllstückreihe unter einer seitlich hierauf wirkenden Druckspannung steht.

6. Einrichtung nach Anspruch 1,
**dadurch gekennzeichnet,** daß
aus der Rückwand (17), aus Seitenwänden (7, 8) des Rahmens, aus einer der Rückwand (17) gegenüberliegenden, den Rahmen schließenden Stirnwand (9), aus einer mittels der Füllstücke (10) gebildeten geschlossenen Decke und aus einem dieser gegenüberliegenden Boden (3) eine im Bereich der Aussparung (4) offene und im übrigen geschlossene Kammer gebildet ist.

## Claims

1. Device for running cables (5) through a housing opening (18) in a housing wall (2) into the interior of a housing, having
- a frame supported by the housing wall (2)
and
- a plurality of cuboid-shaped, one-piece filling pieces (10), made of foamed plastic, which are braced within the frame and are supported on all sides and at least some of which, by virtue of being equipped with a longitudinal bore (11) enclosing a cable (5) and with a parting line (12), act as a respective traction-relieving block for a respective cable (5),
characterised in that
- the frame exhibits a rear wall (17) which supports the said frame and which, on an outer side of the housing wall (2), is detachably connected to the latter, covers the housing opening (18) and exhibits a recess (4),
- the frame protrudes into the interior of the housing
and
- the cables (5) are guided by the recess (4) into the interior of the housing.

2. Device according to Claim 1, characterised in that
- the frame exhibits crosspieces (6) which run perpendicularly to the rear wall (17) and are firmly connected thereto and which are disposed between side walls (7, 8) of the frame
and
- respective interspaces created within the frame by means of the crosspieces (6) are filled with filling pieces (10) which are respectively lined up to form a row of filling pieces.

3. Device according to Claim 2, characterised in that the frame is closed by means of an end wall (9) which is detachably connectable to the side walls (7, 8) of the said frame and lies opposite the rear wall (17) and which presses a respective row of filling pieces against the rear wall (17).

4. Device according to Claim 1, characterised in that the longitudinal bore (11) of a filling piece (10) configured as a traction-relieving block is closed off by means of a dummy plug.

5. Device according to Claim 2, characterised in that the dimensions of the interspaces and of the filling pieces (10) are mutually coordinated such that a respective row of filling pieces inserted into an interspace is subjected to a compressive strain acting laterally thereupon.

6. Device according to Claim 1, characterised in that a chamber which is open in the area of the recess (4) and is otherwise closed is formed from the rear wall (17), from the side walls (7, 8) of the frame, from an end wall (9) lying opposite the rear wall (17) and closing the frame, from a closed ceiling formed by means of the filling pieces (10) and from a floor (3) lying opposite the said ceiling.

## Revendications

1. Dispositif pour la traversée de câbles (5) à travers une ouverture de boîtier (18), pratiquée dans une paroi de boîtier (2), à l'intérieur d'un boîtier comportant
- un cadre porté par la paroi (2) du boîtier et
- plusieurs pièces de remplissage (10) d'un seul tenant, parallélépipédiques, soutenues de tous côtés, serrées à l'intérieur du cadre, réalisées dans une matière plastique expansée, dont certaines au moins servent de blocs de décharge de traction pour un câble (5) respectif, du fait qu'elles sont pourvues d'un trou longitudinal (11), entourant un câble (5) et d'un joint de séparation (12),
caractérisé en ce que
- le cadre comporte une paroi arrière (17) portant celui-ci, qui est assemblée de manière amovible avec la paroi de boitier (2), sur une face arrière de celle-ci, recouvre l'ouverture du boîtier (18) et présente une découpe (4),
- le cadre s'engage à l'intérieur du boîtier et
- les câbles (5) sont introduits à l'intérieur du boitier, à travers la découpe (4).

2. Dispositif selon la revendication 1, caractérisé en ce que
- le cadre comporte des entretoises (6) perpendiculaires à la paroi arrière (17) et reliées de manière fixe à celle-ci, placées entre des parois latérales (7, 8) du cadre et
- les espaces intermédiaires respectifs, réalisés au moyen des entretoises (6), à l'intérieur du cadre, sont remplis de pièces de remplissage (10) juxtaposées en une rangée de pièces de remplissage.

3. Dispositif selon la revendication 2, caractérisé en ce que le cadre est fermé au moyen d'une paroi frontale (9), faisant face à la paroi arrière (17), à relier de manière amovible avec les parois latérales (7, 8) du cadre, laquelle paroi frontale presse une rangée respective de pièces de remplissage contre la paroi arrière (17).

4. Dispositif selon la revendication 1, caractérisé en ce que le trou longitudinal (11) d'une pièce de remplissage (10), conçue comme un bloc de décharge de traction, est fermé au moyen d'un bouchon borgne.

5. Dispositif selon la revendication 2, caractérisé en ce que les dimensions des espaces intermédiaires et des pièces de remplissage (10) sont adaptées les unes aux autres de manière qu'une rangée respective de pièces de remplissage, introduite dans un espace intermédiaire, soit soumise à une contrainte de compression agissant latéralement sur celle-ci.

6. Dispositif selon la revendication 1, caractérisé en ce qu'une chambre, ouverte dans la zone de la découpe (4) et par ailleurs fermée, est formée par la paroi arrière (17), par les parois latérales (7, 8) du cadre, par une paroi frontale (9) faisant face à la paroi arrière (17) et fermant le cadre, par une couverture fermée, formée par les pièces de remplissage (10) et par un fond (3) faisant face à celles-ci.
